(19)

Europäisches Patentamt

European Patent Office

Office européen des brevets

(11) **EP 3 154 174 A1**

(12) **EUROPÄISCHE PATENTANMELDUNG**

(43) Veröffentlichungstag:
**12.04.2017 Patentblatt 2017/15**

(21) Anmeldenummer: **15188959.9**

(22) Anmeldetag: **08.10.2015**

(51) Int Cl.:
*H02K 29/03* (2006.01)        *H02K 1/27* (2006.01)
*H02K 3/28* (2006.01)         *H02K 7/00* (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA**

(71) Anmelder: **Siemens Aktiengesellschaft**
**80333 München (DE)**

(72) Erfinder:
• **Bott, Erich**
  **97618 Hollstadt (DE)**
• **Seufert, Reiner**
  **97616 Salz (DE)**
• **Vollmer, Rolf**
  **36129 Gersfeld (DE)**

(54) **SERVOMOTOR**

(57)     Die Erfindung betrifft einen dreiphasigen Servomotor mit einem Stator (1), der neun im wesentlichen axial verlaufende Nuten (3) aufweist, in denen ein dreiphasiges Wicklungssystem angeordnet ist, das an den Stirnseiten des Stators (1) Wickelköpfe (7) ausbildet, wobei das Wicklungssystem aus Zahnspulen (5) aufgebaut ist. Der Servomotor umfasst ausserdem mit einem Rotor (8), der mit Hilfe einer Welle (11) um eine Achse (13) drehbar angeordnet ist und über einen Luftspalt (15) mit dem Wicklungssystem des Stator (1) elektromagnetisch wechselwirkt und somit eine Drehung verursacht. Der Rotor (8) weist einen oder mehrere Ringmagneten oder Magnetsegmente (9) auf, so dass der Rotor (8) in Umfangsrichtung betrachtet, sechs Pole ausbildet, die radial magnetisiert sind. Dadurch wird eine geringe Drehmomentwelligkeit und ein hohe Ausnutzung erreicht.

FIG 2

EP 3 154 174 A1

**Beschreibung**

Die Erfindung betrifft einen dreiphasigen Servomotor mit einem Stator und einem Rotor.

An einen Servomotor wird die Anforderung gestellt, hoch ausnutzbar zu sein. Als Ausnutzung wird dabei das Drehmoment in Bezug zum aktiven Volumen des Servomotors bezeichnet. Für die Anwendungen von Servomotoren soll dabei die Ausnutzung besonders hoch sein und die Polzahl vergleichsweise gering. Des Weiteren soll die Drehmomentwelligkeit durch einfache Maßnahmen gering gehalten werden, so dass bei Anwendungen von Servomotoren in Werkzeugmaschinen dementsprechende Bearbeitungsgüte gewährleistet wird und damit die Fertigungskosten gering gehalten werden können.

Aus der US 6 657 349 B2 ist ein Servomotor bekannt, der durch verschiedene Staffelwinkel und Schrägungswinkel versucht, die Drehmomentwelligkeit zu reduzieren.

Nachteilig dabei ist, dass mit der vorliegenden Ausführungsform die Ausnutzung des Servomotors nur unzureichend gegeben ist.

Der Erfindung liegt somit die Aufgabe zugrunde, einen Servomotor zu schaffen, der bei vergleichsweise kleinen Polzahlen eine höchste Ausnutzung des Servomotors gewährleistet.

Die Lösung der gestellten Aufgabe gelingt durch einen dreiphasigen Servomotor mit einem Stator, der neun im wesentlichen axial verlaufende Nuten aufweist, in denen ein Wicklungssystem angeordnet ist, das an den Stirnseiten des Stators Wickelköpfe ausbildet, wobei das Wicklungssystem aus Zahnspulen aufgebaut ist, mit einem Rotor, der um eine Achse drehbar angeordnet ist und über einen Luftspalt mit dem Wicklungssystem des Stator elektromagnetisch wechselwirkt und somit eine Drehung verursacht, wobei der Rotor einen oder mehrere Ringmagneten oder Teilringmagnete aufweist, derart, dass der Rotor in Umfangsrichtung betrachtet, sechs Polpaare ausbildet, die lateral magnetisiert sind.

Erfindungsgemäß ist nunmehr ein Stator mit neun Nuten vorgesehen, wobei zwischen zwei Nuten jeweils ein Zahn gebildet ist, um jeden Zahn ist eine Zahnspule angeordnet, so dass bei einem dreiphasigen System mit neun Nuten zumindest drei Zahnspulen pro Phase vorzusehen sind. Dabei sind in jeder Nut jeweils zwei Spulenseiten von Spulen unterschiedlicher elektrischer Phasen L1, L2, L3 angeordnet.

Die Zahnspulen sind erfindungsgemäß elektrisch so kontaktiert, dass ein Statorgrundfeld mit einer Polzahl 2p=6 entsteht. Erfindungsgemäß steht der permanentmagneterregte Rotor, der aus einem 6-poligen lateralen magnetisierten Ringmagneten besteht, in elektromagnetischer Wechselwirkung mit dem Stator.

Durch diese konstruktive Anordnung und elektrische Kontaktierung der Zahnspulen im Stator wird eine vergleichsweise hohe Ausnutzung bei relativ kleinen Polzahlen erreicht. Vorzugsweise weist der Rotor einen Ringmagnet auf, der in Umfangsrichtung einteilig ausgebildet ist und dabei aber jeweils dennoch sechs Pole, insbesondere von lateralen magnetisierten Polen aufweist. Unter einer lateralen Magnetisierung wird verstanden, dass der Nord- und Südpol eines jeden Magneten zum Luftspalt weist, so dass jeweils an der Kontaktfläche zweier in Umfangsrichtung benachbarter Pole eine Polmitte geschaffen ist.

Die sechs Pole auf dem Rotor können ebenso durch Teilringmagnete aufgebaut werden, so dass sowohl in Umfangsrichtung als auch in axialer Richtung auf der Rotoroberfläche mehrere Teilringmagnete angeordnet sind. Dies erleichtert vor allem die Herstellung von Rotoren mit größeren Außendurchmessern. Ein Teilringmagnet weist somit ein Polpaar auf, das zum Luftspalt weist.

Sowohl der Ringmagnet, als auch die Teilmagnete werden konzentrisch auf einer Welle befestigt. Dabei wird zusätzlich die Konzentrizität mit einer Toleranz von kleiner $65\,\mu$m festgelegt, was die Laufruhe des Servomotors verlängert und die Lagerbelastung reduziert.

Um eine möglichst geringe Trägheit des gesamten Systems zu schaffen, wird die radiale Wandstärke der Ringmagnete oder der Teilringmagnete optimiert dahingehend, dass sie maximal 40% des Außendurchmessers einnehmen. Dies führt zu einer gesteigerten Dynamik des Servomotors innerhalb der jeweiligen Anwendung in Werkzeugmaschinen oder Robotern.

Durch die laterale Magnetisierung des Ringmagneten respektive der Teilringmagnete wird nunmehr auf dem Rotor folgender Verlauf des Magnetfeldes geschaffen. An den Polmitten liegen die gleichnamigen Pole der lateral magnetisierten Pole direkt aneinander, so dass dort das Magnetfeld nahezu senkrecht an dem Magnetring, respektive an den Stoßstellen der Teilringmagnete verläuft. Zur Polkante hin, die aber jeweils also virtuelle Polkante zu betrachten ist, ist der Verlauf des Magnetfeldes flacher. Die Polkante befindet sich sowohl bei Ringmagneten als auch bei den Teilringmagneten mittig zwischen den Nord- und Südpolen.

Um die Momentenschwankungen des Servomotors zusätzlich zu reduzieren, werden die Ringmagnete respektive die Teilringmagnete in ihrem axialen Verlauf über den Rotor betrachtet geschrägt ausgeführt, wobei der Zentrierwinkel der Schrägung über die gesamte axiale Länge des Rotors betrachtet vorzugsweise (20°±3°) beträgt.

Falls der Rotor vergleichsweise axial lang ausgeführt werden sollte, können in axialer Richtung betrachtet auch mehrere Ringmagnete hintereinander auf der Welle angeordnet sein. In diesem Fall erhält jeder axiale Ringmagnet eine Schrägung (20°±3°) geteilt durch die Anzahl der axial hintereinander angeordneten Ringmagnete.

Um die Trägheit des Servomotors weiter zu reduzieren, wird die Welle amagnetisch, insbesondere aus CFK oder GFK Material ausgeführt, was die Trägheit der Rotoren weiter reduziert und das Ansprechverhalten des Servomotors verbessert. Dabei wird unter CFK ein kohlenstofffaserverstärkter Kunststoff oder ein Faser-Kunststoff-Verbundstoff verstanden, bei dem Kohlenstofffasern, meist in mehreren Lagen als Verstärkung in eine Kunststoff-Matrix eingebettet werden. Unter GFK Material ein glasfaserverstärkter Kunststoff verstanden, bei dem aus einem Kunststoff und Glasfasern ein Faser-Kunststoff-Verbund gebildet wird.

Die Erfindung sowie weitere vorteilhafte Ausgestaltungen der Erfindung werden anhand eines Ausführungsbeispiels näher erläutert. Darin zeigen:

FIG 1    einen Schaltplan des Stators,
FIG 2    einen Querschnitt des Rotors,

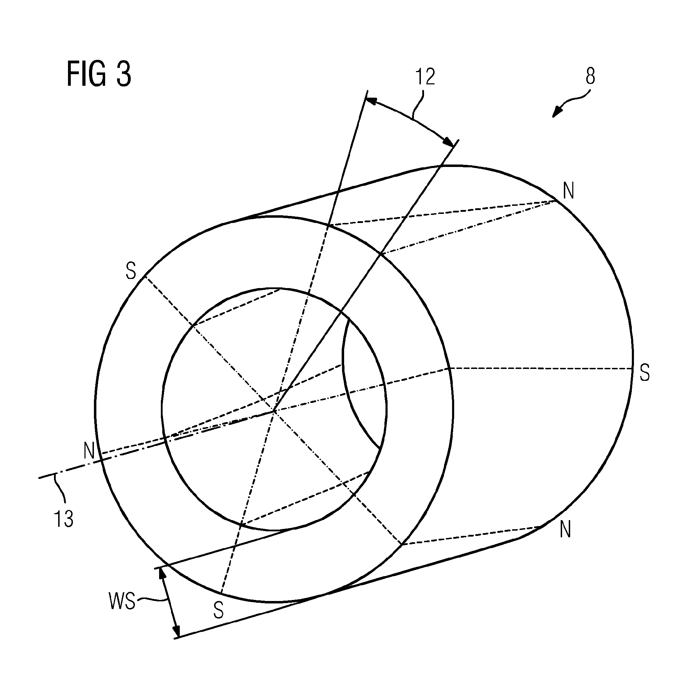

FIG 3    eine perspektivische Darstellung des Rotors,

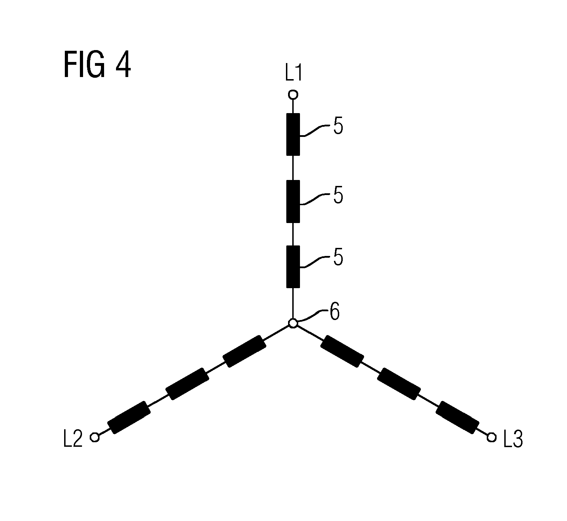

FIG 4    die elektrische Kontaktierung der Zahnspulen der einzelnen Phasen zum Sternpunkt.

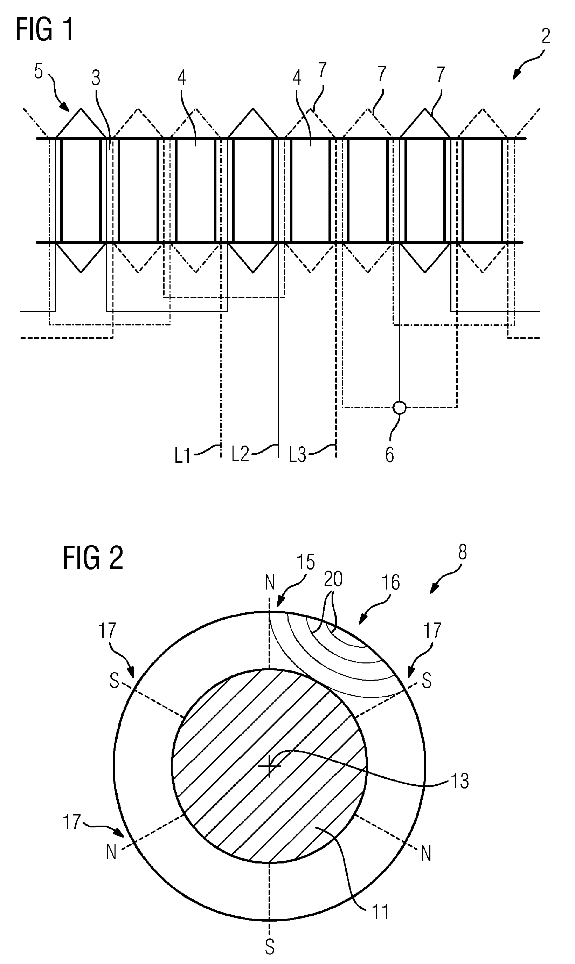

FIG 1 zeigt in einem aufgewickelten Stator 2, eines an sich rotatorischen Servomotors mit drei Phasen L1, L2, L3, Zähne 4 des Blechpakets des Stators 2 mit dazwischen angeordneten Nuten 3, in denen sich die Zahnspulen 5 der jeweiligen Phasen befinden. In jeder Nut 3 sind zwei Spulenseiten unterschiedlicher Zahnspulen 5 unterschiedlicher Phasen L1, L2, L3.

Es sind bei der konkreten vorliegenden Ausführungsform pro Phase drei Zahnspulen 5 in Serie geschaltet. Das bedeutet, für den konkreten Servomotor, dass zwischen den Zahnspulen 5 einer Phase jeweils nur eine Nut vorhanden ist, die nicht von einer Spulenseite dieser phasenzugehörigen Wicklung beaufschlagt ist.

Sowohl die Anschlüsse L1, L2 und L3 der Phasen, als auch der Sternpunkt 6, ebenso wie die Kontaktierung, insbesondere der Serienschaltung der Zahlspulen 5 der einzelnen Phasen erfolgt auf einer Seite bzw. Stirnseite des Stators 2.

Ein derartiger Stator 2 wechselwirkt nun elektromagnetisch mit einem Rotor 8 gemäß FIG 2, der sechs Magnetpole aufweist und um eine Achse 13 drehbar gelagert ist. Der Rotor 8 weist vorzugsweise einen Ringmagneten auf, der über eine laterale Magnetisierung 20 seiner Oberfläche sechs Pole 17 ausbildet. Dabei treten die Feldlinien in einer Polmitte 15 nahezu senkrecht aus der Oberfläche des Rotors 8, während sie im Bereich Polkante 16 flacher aus der Oberfläche austreten.

Durch diese Art der Magnetisierung wird zum einen ein hocheffizienter Rotor 8 geschaffen und zum anderen wird durch die laterale Magnetisierung 20 der Ringmagnete 9 bzw. Teilringmagnete Magnetmaterial eingespart. Ebenso wird insbesondere kein magnetisch leitfähiges Material im Bereich der Ringmagnete oder Teilringmagnete zur Magnetfeldführung benötigt

Somit wird der Servomotor hochdynamisch, da sich die Trägheit des Rotors 8 gegenüber vergleichbaren Servomotoren reduziert.

Um nun bei Einsatz eines Servomotors die Drehmomentenwelligkeit weiter zu reduzieren und die Ausnutzung der Maschine weiter nach oben zu treiben, werden die Pole 17 des Rotors 8 über seinen axialen Verlauf betrachtet, geschrägt ausgeführt. Das bedeutet, dass der lateral magnetisierte Rotor 8 jeweils eine Schrägung pro Pol 17 aufweist, die sich im Bereich von 20°±3° bezogen auf die gesamte axiale Länge des Rotors 8 erstreckt.

Sind axial betrachtet mehrere Ringmagnete 9 hintereinander angeordnet, so teilt sich deren jeweiliger Schrägungswinkel selbstverständlich um 20° ± 3° geteilt durch die Anzahl der axial hintereinander angeordneten Ringmagnete 9.

Die Erfindung lässt sich selbstverständlich auch mit Teilringmagneten in Umfangsrichtung betrachtet ausführen, da auch bei Teilringmagneten eine konzentrische Anordnung um eine Welle 11 möglich ist, was insbesondere bei axial und oder radial größeren Maschinen notwendig ist. Auch dort lassen sich die einzelnen Magnete lateral magnetisieren und auf einer Welle 11 anordnen. Die Teilringmagnete bedecken dann den halben Umfang der Welle 11 oder einen Bruchteil davon. Somit umfasst ein Teilmagnet zumindest zwei "Halbpole", die mit anderen Teilmagneten zusammengesetzt Pole 17 gemäß FIG 2 bilden.

Derartige Maschinen eignen sich aufgrund ihrer geringen Trägheit insbesondere für Servomotoren von Werkzeugmaschinen oder von Robotern.

## Patentansprüche

1.   Dreiphasiger Servomotor mit einem Stator (1), der neun im wesentlichen axial verlaufende Nuten (3) aufweist, in denen ein Wicklungssystem angeordnet ist, das an den Stirnseiten des Stators (1) Wickelköpfe (7) ausbildet, wobei das Wicklungssystem aus Zahnspulen (5) aufgebaut ist,
mit einem Rotor (8), der um eine Achse (13) drehbar angeordnet ist und über einen Luftspalt (15) mit dem Wicklungssystem des Stator (1) elektromagnetisch wechselwirkt und somit eine Drehung verursacht, wobei der Rotor (8) einen oder mehrere Ringmagneten (9) oder Teilringmagnete aufweist, derart, dass der Rotor in Umfangsrichtung betrachtet, sechs Polpaare ausbildet, die lateral magnetisiert sind.

2. Dreiphasiger Servomotor nach Anspruch 1, **dadurch gekennzeichnet, dass** die Ringmagnete (9) in Umfangsrichtung einteilig oder aus Teilringmagneten aufgebaut sind.

3. Dreiphasiger Servomotor nach Anspruch 1 oder 2, **dadurch gekennzeichnet, dass** in axialer Richtung betrachtet ein, zwei oder mehrere Ringmagnete (9) oder Teilringmagnete vorgesehen sind.

4. Dreiphasiger Servomotor nach einem der vorhergehenden Ansprüche, **dadurch gekennzeichnet, dass** der Ringmagnet (9) oder die Teilringmagnete konzentrisch auf einer Welle (11) angeordnet sind.

5. Dreiphasiger Servomotor nach einem der vorhergehenden Ansprüche, **dadurch gekennzeichnet, dass** die radiale Wandstärke (WS) der Ringmagneten oder Teilringmagneten maximal 40% des Außendurchmessers des Rotors (8) einnimmt, insbesondere aber innerhalb des Intervalls liegt, das durch folgende Beziehung vorgegeben ist:

$$\pi * D_a / (2p*2) \; > \; WS \; > \; 0.65 * \pi * D_a / (2p*2)$$

wobei $D_a$ der Außendurchmesser des Rotors
und 2p die Polzahl ist.

6. Dreiphasiger Servomotor nach einem der vorhergehenden Ansprüche, **dadurch gekennzeichnet, dass** der Rotor (8) eine axiale Schrägung über seine gesamte axiale Länge von 20° $\pm$ 3° aufweist.

7. Dreiphasiger Servomotor nach einem der vorhergehenden Ansprüche, **dadurch gekennzeichnet, dass** die Welle (11) amagnetisch insbesondere aus CFK, GFK oder Keramik besteht.

8. Werkzeugmaschine oder Roboter mit zumindest einem dreiphasiger Servomotor mit einem Stator (1), der neun im wesentlichen axial verlaufende Nuten (3) aufweist, in denen ein Wicklungssystem angeordnet ist, das an den Stirnseiten des Stators (1) Wickelköpfe (7) ausbildet, wobei das Wicklungssystem aus Zahnspulen (5) aufgebaut ist, mit einem Rotor (8), der um eine Achse (13) drehbar angeordnet ist und über einen Luftspalt (15) mit dem Wicklungssystem des Stator (1) elektromagnetisch wechselwirkt und somit eine Drehung verursacht, wobei der Rotor (8) einen oder mehrere Ringmagneten (9) oder Teilringmagnete aufweist, derart, dass der Rotor in Umfangsrichtung betrachtet, sechs Polpaare ausbildet, die lateral magnetisiert sind.

FIG 1

5  3  4  4  7  7  7  2

L1  L2  L3  6

FIG 2

15  20  16  8

N

17

S  S  17

13

17

N  N

11

S

FIG 3

FIG 4

Europäisches
Patentamt

European
Patent Office

Office européen
des brevets

**EUROPÄISCHER RECHERCHENBERICHT**

Nummer der Anmeldung

EP 15 18 8959

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2010/283348 A1 (OKUBO MASAYUKI [JP]) 11. November 2010 (2010-11-11) | 1-6,8 | INV. H02K29/03 |
| Y | * Absätze [0001], [0011] - Absatz [0012] * | 2-5,7,8 | H02K1/27 |
| | * Absätze [0022], [0029] - Absatz [0034]; Abbildungen 1-4,6-7 * ----- | | ADD. H02K3/28 H02K7/00 |
| Y | US 2013/020900 A1 (TAKEUCHI KESATOSHI [JP]) 24. Januar 2013 (2013-01-24) * das ganze Dokument * ----- | 2-5,7,8 | |
| X | DE 10 2004 030831 A1 (MITSUBISHI ELECTRIC CORP [JP]) 20. Januar 2005 (2005-01-20) * das ganze Dokument * ----- | 1-6,8 | |
| X,D | US 6 657 349 B2 (FUKUSHIMA TETSUHARU [JP]) 2. Dezember 2003 (2003-12-02) * das ganze Dokument * ----- | 2-6,8 | |

RECHERCHIERTE SACHGEBIETE (IPC)

H02K

Der vorliegende Recherchenbericht wurde für alle Patentansprüche erstellt

| Recherchenort | Abschlußdatum der Recherche | Prüfer |
|---|---|---|
| München | 31. März 2016 | von Rauch, Marianne |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
........................................................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 15 18 8959

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

31-03-2016

| Im Recherchenbericht angeführtes Patentdokument | Datum der Veröffentlichung | Mitglied(er) der Patentfamilie | Datum der Veröffentlichung |
|---|---|---|---|
| US 2010283348 A1 | 11-11-2010 | CN 101939896 A<br>DE 112009000210 T5<br>JP 5523112 B2<br>US 2010283348 A1<br>WO 2009099004 A1 | 05-01-2011<br>05-01-2011<br>18-06-2014<br>11-11-2010<br>13-08-2009 |
| US 2013020900 A1 | 24-01-2013 | CN 102891576 A<br>JP 2013027087 A<br>US 2013020900 A1 | 23-01-2013<br>04-02-2013<br>24-01-2013 |
| DE 102004030831 A1 | 20-01-2005 | CN 1578062 A<br>DE 102004030831 A1<br>JP 4089527 B2<br>JP 2005020930 A<br>US 2005012419 A1 | 09-02-2005<br>20-01-2005<br>28-05-2008<br>20-01-2005<br>20-01-2005 |
| US 6657349 B2 | 02-12-2003 | JP 2001314050 A<br>US 2002047431 A1 | 09-11-2001<br>25-04-2002 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6657349 B2